# EUROPEAN PATENT APPLICATION

(11) **EP 2 143 973 A1**
(43) Date of publication of application: **13.01.2010**
(21) Application number: 08012554.5
(22) Date of filing: 11.07.2008
(51) Int. Cl.: F16F 15/173

(54) **Monitoring system and method for monitoring torsion dampers**

(71) Applicant: KNORR-BREMSE Systeme für Nutzfahrzeuge GmbH, 80809 München (DE); Hasse & Wrede GmbH, 12681 Berlin (DE)
(72) Inventor: Nemeth, Huba, 1116 Budapest (HU); Ailer, Piroska, 1077 Budapest (HU); Knopf, Florian, 14199 Berlin (DE)
(74) Representative: Mattusch, Gundula

(57) **Abstract**

A monitoring system (8) for a torsional vibration damper (1, 2) coupled to a shaft (5) to be protected against torsional vibration, said torsional vibration damper (1, 2) comprising at least a viscous fluid coupling between its housing (1) and its inertia ring (2), said system further comprising a control device with at least two sensors (10, 7) arranged at the damper (1, 2) to monitor the shaft-damper (1,2,5) operation, wherein the first of the at least two sensors (10) is configured to acquire the speed of the free end of the protected shaft (5) and the second of the at least two sensors (7) is a temperature sensor configured to acquire the thermal state of the damper (1, 2); and a monitoring method thereof.

## Description

The present invention relates to a monitoring system and a method thereof for torsion dampers.

Torsional dampers are used to reduce the torsional vibration of shafts to avoid excessive load and fail of structural components. These are especially used in internal combustion engines on crankshafts and camshafts, where the combustion process of the engine cylinders raises heavy vibration excitation. For high performance damping task the damper usually exhibits at least a viscous coupling by fluid (visco dampers). At long life time operation engines (e.g. locomotive, power plants and marine engines) the engine life time exceeds the viscous fluid life time. For that reason the damper needs maintenance. This maintenance is currently done on an irregular basis or just according to operation hours, resulting sometimes in a fail of the damper and in consequence of the engine.

To improve maintenance prediction and review engine and damper overload a monitoring system is required. Several systems and methods have been proposed in order to monitor torsional vibration dampers.

Document EP 0 478 529 A3 describes an arrangement for the control of condition parameters of a drive determined by torsional vibrations. A drive comprises a torsional vibrational damper or a torsionally flexible coupling, which have spring elements arranged between inner and outer parts which can be twisted with respect to one another. For the purpose of continuous monitoring of state variables of this drive determined by torsional vibrations, the inner part and the outer part of the damper or of the coupling are assigned in each case at least one measured-value transmitter, which is connected to a computer, for determining the absolute torsion of the inner or outer part, which computer on the one hand compares the input measured values of the inner part as actual dimensions for the reversal voltage of a drive shaft with a stored voltage limiting value, and/or on the other hand compares the differential value of the input measured values of the inner and outer parts as actual dimensions for the spring deflection of the spring elements with a stored spring deflection limiting value, and triggers an alarm signal when one and/or the other limiting value is exceeded.

Document DE 10 2006 015 867 A1 shows a method for monitoring a torsional vibration damper. The method involves deriving the relative torsion angles between a connected part and a seismic rotating mass from the time-synchronously measured rotation angles of the two parts, and then determining the angular accelerations of the seismic rotating mass, taking account of any changes in the angular speed of the connected part. The pre-defined moment of inertia of the seismic rotating mass is used to calculate the torsional stiffness and torsional damping parameters.

An internal viscous damper monitoring system and a method is described in US 2007079785. A method for operating an internal combustion engine of a vehicle traveling on the road, the method comprising of damping engine vibration with a damper coupled to the engine, and when said damping is reduced, preventing engine speed from falling below a threshold value, at least under selected operating conditions, to reduce degradation of the engine that would otherwise occur. In this case the system monitoring the damper has a direct influence to the engine, too. This document does not disclose a way of monitoring.

Such torsion damper monitoring systems are not suitable for viscously coupled damper but for purely spring coupled dampers only, which do not require monitoring of the degradation of a viscous fluid.

In view of the above it as an object of the present invention to provide a system and a method of monitoring the degradation of the damper function and capturing overload of the protected shaft and the damper as well.

According to the present invention this object is achieved by a monitoring system comprising the features of claim 1 and by the method of claim 4.

The system and the method of the present invention be put into practice with an minimum of effort and costs.

In a preferred embodiment, the monitoring system comprises further a torque sensor that acquires the coupling torque between the shaft to be protected and the damper housing. This is advantageous due to the additional data providing more information which has not to be calculated from other data.

According to another preferred embodiment, the monitoring system further comprises an inertia ring speed sensor to improve accuracy. Thus it is possible, e.g. to calculate an estimated life span of the damper to the next changing of the coupling fluid or to change the whole damper before damage of the shaft and other parts will occur.

In addition to this, it is also possible, the monitoring may comprise a maintenance prediction based on the excessive thermal or vibratory load of the free end of the shaft corresponding to the acquired and processed data of the sensors.

According to another embodiment of the present invention, the monitoring comprises a malfunction warning of free end vibratory overload based on the acquired and processed data of the free end speed sensor signal for sum vibration angle or at selected orders. Thus an improved monitoring will be given, as well as the monitoring comprises a malfunction warning of thermal overload based on the acquired and processed data of the temperature sensor.

The monitoring may also comprise a method of inertia ring speed reconstruction based on the acquired signal data. Due to this there are only some signal data necessary from which other warning data may be calculated.

In a further embodiment the monitoring comprises a warning method of damper twist vibratory overload (difference of damper housing, inertia ring velocity and position) based on the acquired free end speed data and optional inertia ring sensor data or the reconstructed inertia ring speed for sum vibration angle or at selected orders. The acquired data are useful to calculate and derive further information important for the damper-shaft system, as well as the monitoring comprises a method for maintenance prediction.

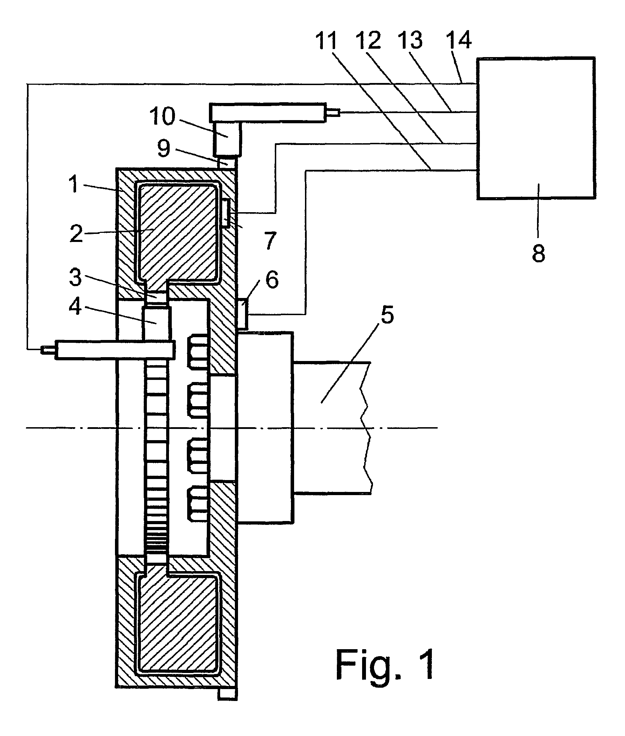

The present invention will be described by way of example with reference to the accompanying schematic drawing - figure. 1 - which illustrates a schematic viscous coupled damper system.

The invention provides a monitoring system that is capable to monitor the operation of the protected shaft and the damper, which has at least a viscous coupling. The system schematic is depicted in the figure.

The basic vibration system is build up of a shaft (5) to be protected against torsion vibrations by a damper that has at least a viscous coupling between its ring shaped housing (1) and its inertia ring (2) which is movable in the housing relatively to the housing. The housing is coupled to the shaft (5) and rotates with the shaft.

The monitoring system comprises at least two sensors: one which is designed and provided for sensing the speed of the damper housing (10) by e.g. a pole wheel (9) and a temperature sensor (7) which is capable of measuring the temperature of the damper.

The speed signal of the damper housing equals to the speed of the free end of the protected shaft. Thus it serves to monitor of its vibration amplitudes. The temperature signal monitors the thermal load of the viscous fluid that is the most important state regarding thermal loading.

The monitoring system can be extended with two further optional sensors as follows to provide more details of the damper operation. The one is a torque sensor (6) that measures the coupling torque between the shaft and the damper housing, which is the excitation torque to the damper. Furthermore a second speed sensor (4) can be added to monitor the speed of the inertia ring by e.g. another pole wheel (3).

The sensors are connected to the monitoring system (8) by the cables (11-14) that processes them and evaluates the vibration amplitudes, thermal conditions and other states.

The measured damper housing speed serves also for monitoring the vibration amplitudes of the protected shaft. These vibration amplitudes are proportional to the torsion shaft load. So this signal can be used for malfunction warning as well.

The relative angular velocity between the damper housing and the inertia ring characterises to the mechanical load of the damper that can be used for malfunction warning of the damper.

The measured temperature signal serves additionally of the thermal overload warning, too.

It will be apparent to those skilled in the art that modifications and variations can be made to the embodiments described above.

## Claims

1. A monitoring system (8) for a torsional vibration damper (1, 2) coupled to a shaft (5) to be protected against torsional vibration, said torsional vibration damper (1, 2) comprising preferably at least a viscous fluid coupling between its housing (1) and its inertia ring (2), said system further comprising a control device with at least two sensors (10, 7) arranged at the damper (1, 2) to monitor the shaft-damper (1, 2, 5) operation, wherein a first of said at least two sensors (10) is configured for acquiring the speed of the free end of the protected shaft (5) and wherein a second of said at least two sensors (7) is a temperature sensor configured for sensing the thermal state of the damper (1, 2).

2. The monitoring system (8) according to claim 1, wherein the monitoring system (8) comprises further a torque sensor (6) that acquires the coupling torque between the shaft (5) to be protected and the damper housing (1).

3. The monitoring system (8) according to claims 1 or 2, wherein the monitoring system (8) comprises further an inertia ring speed sensor (4).

4. A method for monitoring a torsional vibration damper (1, 2) coupled to a shaft (5) to be protected against torsional vibration, said torsional vibration damper (1, 2) comprising preferably at least a viscous fluid coupling between its housing (1) and its inertia ring (2), and further comprising a control device with at least two sensors (10, 7) arranged at the damper (1, 2) to monitor the shaft-damper (1, 2, 5) operation, the method comprising the following steps:
(i) Acquiring data corresponding to the speed of the free end of the protected shaft (5) by the first of the at least two sensors (10);
(ii) Acquiring data corresponding to the thermal state of the damper (1, 2) by the second of the at least two sensors (7) configured as a temperature sensor; and
(iii) Monitoring the shaft-damper (1, 2, 5) operation by processing the acquired data and comparing the processed data with predetermined threshold values.

5. The monitoring method according to claim 4, wherein the monitoring comprises a maintenance prediction based on the excessive thermal or vibratory load of the free end of the shaft (5) corresponding to the acquired and processed data of the sensors (10, 7).

6. The monitoring method according to claims 4 or 5, wherein the monitoring comprises a malfunction warning of free end vibratory overload based on the acquired and processed data of the free end speed sensor signal for sum vibration angle or at selected orders.

7. The monitoring method according to any of the claims 4 to 6, wherein the monitoring comprises a malfunction warning of thermal overload based on the acquired and processed data of the temperature sensor (7).

8. The monitoring method according to claims 6 or 7, wherein the monitoring comprises a method of inertia ring (2) speed reconstruction based on the acquired signal data.

9. The monitoring method according to any of the claims 6 to 8, wherein the monitoring comprises a warning method of damper twist vibratory overload (difference of damper housing (1), inertia ring (2) velocity and position) based on the acquired free end speed data and optional inertia ring sensor data or the reconstructed inertia ring speed for sum vibration angle or at selected orders.
